# EUROPEAN PATENT APPLICATION

(11) **EP 0 539 768 A2**
(43) Date of publication of application: **05.05.1993**
(21) Application number: 92117094.0
(22) Date of filing: 07.10.1992
(51) Int. Cl.: B32B 1/00, B32B 27/30, B32B 5/18, B29C 67/22

(54) **Machine for the manufacture of sandwich panels**

(30) Priority: 08.10.1991 IT PD910092; 08.10.1991 IT PD910184; 05.06.1992 IT PD920100
(71) Applicant: REXPOL S.r.L., I-35131 Padova (IT)
(72) Inventor: Tonello, Romeo, I-35131 Padova (IT)
(74) Representative: Gustorf, Gerhard, Dipl.-Ing.

(57) **Abstract**

The invention is a new machine for the manufacture of roofing panels consisting of an upper sheet, a foam polystyrene insulating layer and, if required, a lower protection sheet.

The polystyrene sintering takes place directly on the upper sheet, that serves also as a die in the sintering phase. The polystyrene granules that are introduced in the chamber obtained between the upper sheet, previously treated with a bonding agent, and the fixed mould are heated and foamed by means of steam, thus realizing a rigid panel of the necessary thickness. The panel is used, in particular, for the roofing of industrial buildings or for the realization of insulated curtain walls.

## Description

At the moment for the roofing of industrial buildings asbestos cement plates with curved section are used, the edges of which rest on concrete beams that , for example, can be Y-shaped. This kind of roofing, however, doesn't guarantee a good heat insulation, that requires the application of further insulating panels on other lower plates; besides, the roofings obtained in this way are very heavy and their weight rests on the supporting structure of the buildings.

There are also panels, used for roofing or for curtain walls, that consists of an insulating material layer placed between two identical or different coverings, such as board, chalk covered board, sheet, wood composite and the like. The production of this kind of panels is very hard, since it is necessary to cut the insulating layer from a single block and then assemble it with the coverings through a glueing and then a pressing process, that facilitates the glueing. The thus produced panels aren't very strong and resisting and the glueing between the covering and the insulating layer isn't always perfect.

Besides, their shapes can be only simple and flat, since it is difficult to couple complex and curved profiles properly.

Nowadays on the market there are foam polystyrene coupled panels produced by glueing foam polystyrene plates, obtained from blocks through thermoelectric cutting, on flat supports previously treated with suitable bonding agents. Here to facilitate and guarantee a sufficient glueing effect it is necessary to resort to various pressing systems.

The results obtained up to now are absolutely unsatisfactory, because of the cost of the panel and of the inconveniences that are likely to occurr, like bad glueing due to the presence of air bubbles, or panels that aren't flat and cannot be utilized.

There are also heat insulated sandwich panels realized with a layer of polyurethan foams, the foaming of which is realized by means of CFC type expanding gas, which is so bad for the environment that in some countries its use has already been prohibited.

Besides, polyurethan foams have also the great disadvantage of absorbing humidity through capillarity, which damages the metal support, and of producing air bubbles inside the foam in the foaming phase, thus creating lack of homegeneity in the panel.

In order to solve the problems described above a new kind of panel has been designed.

These panels consist of a thin metal plate on which a foam polystyrene layer is directly sintered.

In fact, the metal plate is characterized by a good mechanical resistance and is totally weatherproof, the heat insulating layer presents an optimal reduction of the loss of heat, is waterproof and is characterized by an adequate structural stiffness and by a considerable lightness.

Sintering the insulating layer directly on the covering plate panels are produced, that have perfect coupling, structural stiffness, optimal heat insulation, considerable lightness and are totally weatherproof.

It is possible to increase the mechanical resistance of the panels including a metal plate with corrugated or notched section or the like.

The panels can be realized with linear, or partially curved or completely curved profile.

If these panels are used for visible coverings, to protect the heat insulating layer it is possible to add on the lower polystyrene layer a sheet made of stainless steel or of prepainted steel or of smooth or corrugated aluminium, or a synthetic treatment with powders and/or colouring agents.

The machine that produces these panels consists of a fixed mould, provided with all the equipment necessary for the sintering of foamed polystyrene, on which a sheet is placed, that serves as a die during the sintering phase; this sheet, called upper sheet, will be the upper protection part of the produced sandwich panel. The foaming chamber of the new machine, therefore, consists of an upper sheet, that has been previously treated with a bonding agent and that is replaced from time to time, and by the fixed mould.

In order to keep the upper sheet in its correct position during all the working phases, the machine has an upper mobile plane that translates, preferably with vertical motion.

The machine upper surface, that, therefore, has the function to stop the thrusts in the polystyrene sintering phase, is completely or partially shaped in conformity with the profile of the upper protection sheet of the panel, that can be of any kind, for example it can be corrugated, notched or ribbed.

Injecting and foaming the polystyrene directly inside the described chamber the perfect adherence between polystyrene and upper sheet is obtained.

In its essential parts the fixed mould consists of a lower surface, of two side edges and of two heads. On these two heads, that can move to obtain panels of different sizes, the injectors for the polystyrene are applied. On the fixed mould are applied also the ducts for the introduction and extraction of steam, for making vacuum and for the cooling process.

The upper surface is raised to introduce the sheet, that rests on the side edges and on the heads of the fixed mould, that on their turn serve for containing the polystyrene granules injected for the sintering, and it is raised also to allow the extraction of the finished panel. Before being placed on the mould the sheet lower surface is covered with a suitable bonding agent, that when in contact with heat and humidity reacts very quickly and guarantees a strong bond between foamed polystyrene and sheet.

Once the upper surface has been lowered down to the sheet, inside the chamber a depression is created, while the polystyrene granules that will be distributed in the chamber itself are injected by the injectors, that are preferably placed at the head, through pression. The lower surface of the fixed mould is equipped with microholes through which the steam for the polystyrene foaming is injected, while on the side edges there are other microholes to let the steam out. The mould lower surface is cooled with water, thus allowing a quicker extraction of the finished panel.

It is possible to manufacture directly in the machine panels that are covered with sheet also in the lower part. It is sufficient to place on the lower surface a sheet with microholes, in which the microholes of the lower covering surface allows the passage of steam from the lower surface nozzles toward the injected polystyrene.

In case of flat sheets without holes, the steam enters through nozzles placed in the mould perimeter.

Equivalent solutions are represented by machines equipped with fixed upper surface and mobile lower surface or with the edges or the heads that can be mobile or integral with the lower or upper surface.

Due to their lightness, the panels obtained with this machine are preferably used for the roofing of buildings in general and of industrial buildings in particular and are composed of an upper sheet perfectly joined with foamed polystyrene; all the panel components, that is, upper sheet, foamed polystyrene, lower sheet, are perfectly integral with one another and the panel, owing to the stiffness of foamed polystyrene, has a constant and perfectly modular dimension. It is possible to produce both a panel without lower protection layer and a sandwich panel in which the foamed polystyrene heat insulating layer is placed between an upper sheet (corrugated, notched, etc.) and a lower sheet.

The following is just an example among many of the practical applications of the invention in question, illustrated in the attached tables.

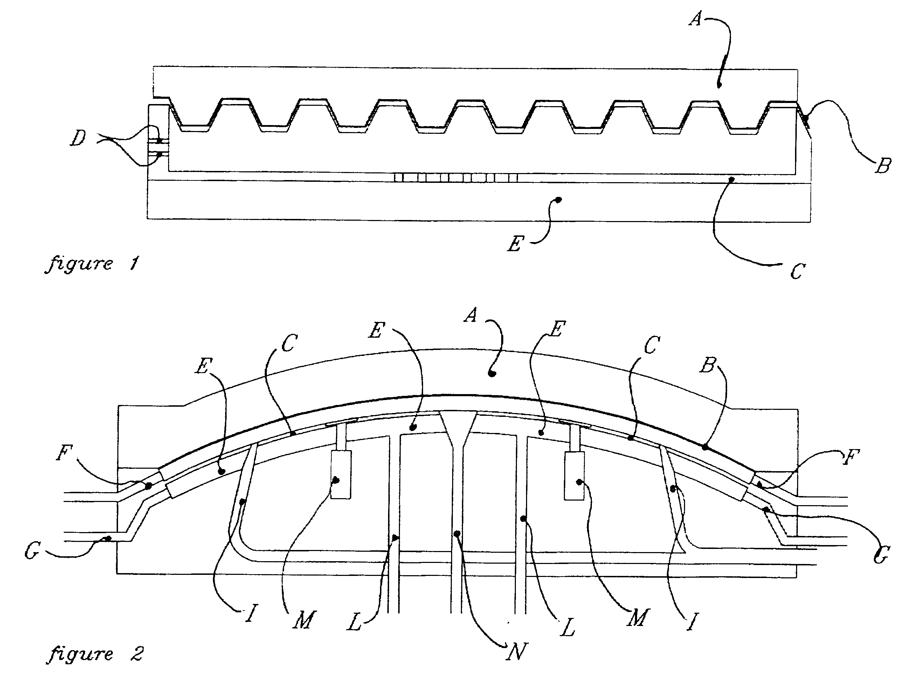

Table 1 shows a transversal section (Fig.1) and a longitudinal section (Fig.2) of the machine for the production of the panels (P); in this table A indicates the upper mobile surface, that in this example has a notched profile, B indicates the notched sheet with the lower surface treated with bonding agent, C the lower surface with microholes for the introduction of steam, D the edges with microholes to let the steam out, E the lower chamber for the lower surface cooling, F the injectors of polystyrene granules, G the ducts to feed cooling water in the lower chamber (E), I the steam injection ducts, L the cooling water discharge ducts, M the extraction hydraulic jacks that help the extraction of the already produced panel, N the vacuum pump duct that helps the distribution of the polystyrene granules.

Figures 3 shows a section of a curved panel (P).

The metal plate (M) with notched section, the polystyrene heat insulating layer (T), the sheet with microholes (L) that protects the polystyrene layer (T) are highlighted, too.

In Figure 4 it is possible to observe a typical application of panel (P), in its curved section version, resting on Y-shaped beams as roofing of an industrial building.

## Claims

**1)** Machine for the realization of panels with foamed polystyrene heat insulating layer, characterized by the fact that its foaming chamber consists of a fixed mould and of a properly supported upper sheet, that serves as a die during the foamed polystyrene sintering phase and in which this sheet, having been previously treated with a bonding agent, remains integral with the foamed polystyrene layer, thus allowing to obtain the perfect consolidation between this upper sheet and the foamed polystyrene.

**2)** Machine as in claim 1, characterized by the fact that the fixed mould is provided with all the equipment necessary for the polystyrene sintering, such as the ducts for the introduction of polystyrene, for the introduction and exit of steam and for the cooling process.

**3)** Machine as in claims 1 and 2, characterized by the fact that on the lower mould finishing surface there are teeth and/or notches, so that it is possible to obtain a panel with the lower finished surface worked and shaped in various ways.

**4)** Machine for the realization of panels as in claims 1, 2, 3, characterized by the fact that it is possible to obtain a rigid panel consisting of a sheet plate and of a foamed polystyrene layer integral with it, that if necessary can be protected by a lower layer made of metal or other material.

**5)** Sandwich panel with foamed polystyrene insulating layer, characterized by the fact that it has the heat insulating material directly sintered on the upper metal sheet, and in which this panel can have a flat or curved profile, and where this metal sheet can have a smooth and/or corrugated and/or notched and/or ribbed section.

**6)** Panel as in claim 5, characterized by the fact that during the foaming phase or after it, a layer of protection material is fixed on the lower surface.

**7)** Panel as in claims 5 and 6, characterized by the fact that the lower surface is preformed directly in contact with the mould equipped with teeth and/or notches, that allow to obtain several shapes and profiles.
